# EUROPEAN PATENT APPLICATION

(11) **EP 4 765 734 A1**
(43) Date of publication of application: **24.06.2026**
(21) Application number: 24307249.3
(22) Date of filing: 20.12.2024
(51) Int. Cl.: H04L 9/40, H04L 67/02

(54) **METHOD AND SYSTEM FOR USER ACCESS TO WEB APPLICATION**

(71) Applicant: OVH, 59100 Roubaix (FR)
(72) Inventor: LOISEAU, Francois, 62138 Haisnes (FR); ALLABERT, Hugo, 59290 Wasquehal (FR)
(74) Representative: BCF Global

(57) **Abstract**

A method and system for accessing a web application (120₁) accessible through a web interface, comprises requesting by, and granting to a User device (136) access to the web application (120₁), creating by a Bastion orchestrator (160) upon request from the Infrastructure system (150), a HTTPS Bastion (103₁), sending by the User device (136) a request to an Application router (102), and routing by the Application router (102) the request to the HTTPS Bastion (103₁), rewriting the request by the HTTPS Bastion (103₁) into a rewritten request, and sending the rewritten request to the web application (120₁), receiving by the HTTPS Bastion (103₁) a response from the web application (120₁), rewriting the response by the HTTPS Bastion (103₁) into a rewritten response, sending the rewritten response to the Application router (102), and routing by the Application router (102) the rewritten response to the User device (136).

## Description

### FIELD

The present technology relates to information technology infrastructure and more particularly to methods and systems for enabling a user device to access web applications.

### BACKGROUND

In an infrastructure system that hosts applications, such as that provided by an infrastructure provider, access to production applications is via web interfaces. The problem with web interfaces is that all services are exposed via an official https certificate, delivered by certification authorities. Access to these web interfaces has to be limited in order to restrict their exposure. Typically, this is achieved by the infrastructure provider providing machines which use is dedicated to opening a web browser to access these web interfaces. An infrastructure administrator may for example use such dedicated machines to access hosted production applications. In such a case, SSL certificates are relied upon to ensure that the administrator is properly connected to the intended web interfaces.

Traceability of accesses by the infrastructure administrator to the production applications is a requirement for audit and security purposes in the infrastructure system, or training needs for administrators. In the case of dedicated machines used by the infrastructure administrator, such traceability is difficult to obtain, in particular where correlation of events between interface actions and infrastructure behavior cannot be verified.

Therefore, even though the developments identified above may provide benefits, improvements are still desirable.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

The following summary is for illustrative purposes only, and is not intended to limit or constrain the detailed description. The following summary merely presents various described aspects in a simplified form as a prelude to the more detailed description provided below.

Implementations of the present technology have been developed at least in part based on developers' appreciation of shortcomings associated with the prior art. Developers of the present technology have devised generally a method and system to enable a user device to access web applications.

More particularly, in an aspect of the present technology, there is provided a method for accessing a web application accessible through a web interface comprising:
- requesting by a User device to an Infrastructure system access to the web application;
- granting by the Infrastructure system access to the web application;
- creating by a Bastion orchestrator upon request from the Infrastructure system, a HTTPS Bastion, the request comprising a type for the web application;
- fetching by the HTTPS Bastion from a Library database a library corresponding to the type for the web application;
- sending by the User device a request to an Application router, and routing by the Application router the request to the HTTPS Bastion;
- rewriting, based on the fetched library, the request by the HTTPS Bastion into a rewritten request, and sending the rewritten request to the web application;
- receiving by the HTTPS Bastion a response from the web application; and
- rewriting, based on the fetched library, the response by the HTTPS Bastion into a rewritten response, sending the rewritten response to the Application router, and routing by the Application router the rewritten response to the User device.

In embodiments, the method further comprises:
- obfuscating message details from the rewritten request and/or the rewritten response; and
- sending by the HTTPS Bastion to a Log System obfuscated copies of the rewritten request, and/or of the rewritten response.

In embodiments, the method further comprises:
- sending by the Bastion orchestrator to the HTTPS Bastion a list of authorized user devices; and
- checking by the HTTPS Bastion through inspecting the request header, that the User device is on the list, and if it is not, rejecting the request.

In embodiments, the method further comprises:
- authenticating a user of the User device through a SSO;
- sending by the SSO a http header for the authenticated user to the Application router;
- sending by the Application router the http header to the HTTPS Bastion;
- checking by the HTTPS Bastion through comparing the request header and the received http header, that the user is authenticated, and if it is not, rejecting the request.

In embodiments of the method, the obfuscated message details comprise login and password of the authenticated user.

In embodiments of the method, the web application is one of at least two web applications, a first and a second, and the method further comprises:
- requesting by the User device to the Infrastructure system access to the second web application;
- granting by the Infrastructure system access to the second web application;
- creating by the Bastion orchestrator upon request from the Infrastructure system, a second HTTPS Bastion, the request comprising a type for the second web application;
- fetching by the second HTTPS Bastion from the Library database a library corresponding to the type for the second web application;
- sending by the User device a second request to the Application router, and routing by the Application router the second request to the second HTTPS Bastion;
- rewriting, based on the fetched library corresponding to the type for the second web application, the second request by the second HTTPS Bastion into a second rewritten request, and sending the second rewritten request to the second web application;
- receiving by the second HTTPS Bastion a second response from the second web application; and
- rewriting, based on the fetched library corresponding to the type for the second web application, the second response by the second HTTPS Bastion into a second rewritten response, sending the second rewritten response to the Application router, and routing by the Application router the second rewritten response to the User device.

In another aspect of the present technology, there is provided a system for accessing a web application accessible through a web interface comprising:
- a Bastion orchestrator;
- an Application router;
- a Library database; and
- a HTTPS Bastion;
- the HTTPS Bastion being created by the Bastion orchestrator upon request from an Infrastructure system, upon a request by a User device to the Infrastructure system for access to a web application and a grant by the Infrastructure system of such access, the request from the Infrastructure system comprising a type for the web application;
- the Application router being configured to receive a request by the User device and route such request to the HTTPS Bastion, and receive a rewritten response from the HTTPS Bastion and route the rewritten response to the User device; and
- the HTTPS Bastion being configured to:
   - fetch from the Library database a library corresponding to the type for the web application;
   - rewrite, based on the fetched library, the request received from the Application router into a rewritten request, and send the rewritten request to the web application;
   - receive a response from the web application; and
   - rewrite, based on the fetched library, the response into the rewritten response, and send the rewritten response to the Application router.

In embodiments of the system, the HTTPS Bastion is further configured to:
- obfuscate message details from the rewritten request and the rewritten response; and
- send to a Log System obfuscated copies of the rewritten request, and/or of the rewritten response.

In embodiments of the system:
- the Bastion orchestrator is further configured to send to the HTTPS Bastion a list of authorized user devices; and
- the HTTPS Bastion is further configured to check through inspecting the request header, that the User device is on the list, and if it is not, rejecting the request.

In embodiments of the system:
- the Application router is further configured to receive from a SSO a http header corresponding to a user of the User device authenticated by the SSO, and sending the http header to the HTTPS Bastion; and
- the HTTPS Bastion is further configured to compare the request header and the received http header, check that the user is authenticated, and if it is not, reject the request.

In embodiments of the system, the HTTPS Bastion is further configured to obfuscate message details comprising login and password of the authenticated user.

In embodiments of the system, the HTTPS Bastion is a Kubernetes job.

In embodiments, the system further comprises a second HTTPS Bastion being created by the Bastion orchestrator upon request from the Infrastructure system, upon a request by the User device to the Infrastructure system for access to a second web application and a grant by the Infrastructure system of such access, the request from the Infrastructure system comprising a type for the second web application;
- the second HTTPS Bastion being configured to:
   - fetch from the Library database a library corresponding to the type for the second web application;
   - rewrite, based on the fetched library, the request received from the Application router into a rewritten request, and send the rewritten request to the second web application;
   - receive a response from the second web application; and
- rewrite, based on the fetched library, the second response into the rewritten response, and send the rewritten response to the Application router.

In another aspect of the present technology, there is provided a computer-readable medium comprising instructions which, when executed by a processing unit, cause the processing unit to perform the method above. of any of the claims 1 to 6.

In the context of the present specification, a "server" is a computer program that is running on appropriate hardware and is capable of receiving requests (e.g., from administrator devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers.

In the context of the present specification, "user device" is any computer hardware that is capable of running software appropriate to the relevant task at hand. Thus, some (non-limiting) examples of user devices include personal computers (desktops, laptops, notebooks, etc.), smartphones, and tablets, etc. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "component" is meant to include software (appropriate to a particular hardware context) that is both necessary and sufficient to achieve the specific function(s) being referenced.

In the context of the present specification, unless expressly provided otherwise, the expression " computer-readable medium " and " memory " are intended, unless more specifically defined in the description, to include media of any nature and kind whatsoever, non-limiting examples of which include RAM, ROM, disks (CD-ROMs, DVDs, floppy disks, hard disk drives, etc.), USB keys, flash memory cards, solid state-drives, and/or tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, a "network" is intended to include a configuration of devices and software that are in mutual communication and can exchange information, including data and instructions. Such communication is accomplished by the presence of a direct physical connection between devices (i.e., wired communication) and/or indirectly by electromagnetic or other non-physically connected communication (i.e., wireless communication), using whatever protocols are existing between the two devices. A network can include arbitrary numbers and types of devices, systems, and applications, which, in some exemplary, illustrative, non-limiting embodiments, function in accordance with established policies. In some networks, the networking devices, systems and applications comprised in the network can change over time, as can their configurations, locations and other parameters as networking devices are connected or disconnected from the network whether purposely or inadvertently.

Networking devices may be equipment such as switches, routers, gateways, or the like, that are designed to provide services of communication between user devices, or other networking devices.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a data object with respect to a particular object storage device, or some other means of directing the recipient of the indication to a network location, memory address, database table, or other location where the data object may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

These and other features, aspects, and advantages of the present disclosure will become better understood with regard to the following description, claims, and drawings. The present disclosure is illustrated by way of example, and not limited by, the accompanying figures in which like numerals indicate similar elements:
Figure 1 is a schematic diagram of a system in accordance with implementations of the present technology;
Figures 2a to 2c are flow diagrams of messages exchanged between elements of the system toward creation/destruction of temporary jobs in accordance with implementations of the present technology;
Figure 3 is a flow diagram of messages exchanged between elements of the system toward access of a user to a web application, and traceability of certain such messages in accordance with implementations of the present technology;
Figure 4 is a flow chart of steps of the method in accordance with implementations of the present technology; and
Figure 5 represents a computing system that may be used as part of the present technology.

It should also be noted that, unless otherwise explicitly specified herein, the drawings may not be drawn to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", "processing unit", "computer" or "computing system" etc., may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a Central Processing Unit (CPU) or a processor dedicated to a specific purpose, such as a Digital Signal Processor (DSP). Moreover, explicit use of the term a "processor" should not be construed to refer exclusively to hardware capable of executing software, and may implicitly include, without limitation, Application Specific Integrated Circuit (ASIC), Field Programmable Gate Array (FPGA), flash memory, Read-Only Memory (ROM) for storing software, Random Access Memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

It is to be expressly understood that the figures merely depict illustrative implementations of the present technology. Thus, the description thereof that follows is intended to be only a description of illustrative examples of the present technology. In some cases, what are believed to be helpful examples of modifications to the present technology may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition, it is to be understood that the present disclosure may provide in certain instances simple implementations of the present technology, and that where such is the case they have been presented in this manner as an aid to understanding. As persons skilled in the art would understand, various implementations of the present technology may be of a greater complexity.

With these fundamentals in place, we will now consider some non-limiting examples to illustrate various implementations of aspects of the present technology.

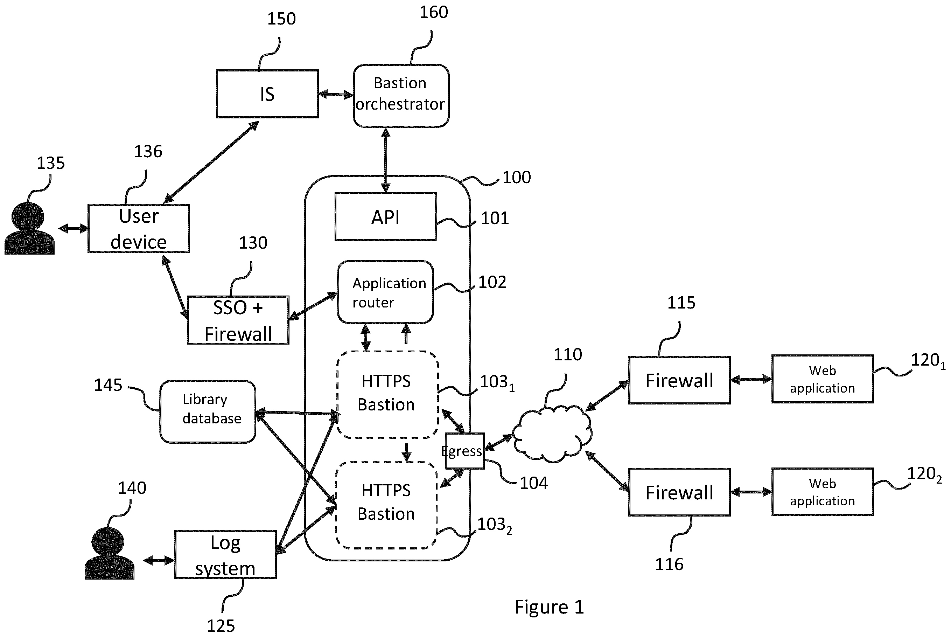

Referring to Figure 1, there is shown an example of a system being suitable for implementing non-limiting embodiments of the present technology. A Kubernetes cluster 100 consists, as is known to the skilled person, of a control plane plus a set of worker machines, called nodes, that run containerized applications. The worker node(s) host the Pods that are the components of the application workload. The control plane manages the worker nodes and the Pods in the cluster. It includes a control plane component that runs controller processes such as: a node controller, responsible for noticing and responding when nodes go down, a job controller, responsible for watching for job objects that represent one-off tasks, then creating Pods to run those tasks to completion, etc.

The control plane further includes an API server that exposes the Kubernetes API, shown as reference 101 on Figure 1. The API server exposes an http API that lets the different parts of the Kubernetes cluster 100 and external components communicate with one another. The Kubernetes API 101 allows to query and manipulate the state of API objects in the Kubernetes cluster 100. Operations may be performed through command-line interface or other command-line tools, or using REST calls.

In embodiments of the present technology, an Application router 102, as a permanent container in the Kubernetes cluster 100, may generally route messages exchanged between a User device 136 used by a User 135, and respective HTTPS Bastions; 103ᵢ. User 135 may for example be an administrator of an Infrastructure system 150.

HTTPS Bastions; 103ᵢ may be implemented, in embodiments, as jobs in the Kubernetes cluster 100, to enable exchanging messages between the User device 136 and target Web applications 120ᵢ respectively. As explained below, portions of certain messages received from the User device 136 may be rewritten by the HTTPS Bastions; 103ᵢ depending on the type of Web applications 120ᵢ they are intended for, before they are sent to such applications. Similarly, portions of certain responses received from the Web applications 120ᵢ may be rewritten by the HTTPS Bastions; 103ᵢ before they are sent back to the User device 136. As an example, two Web applications 120₁ and 120₂ are shown Figure 1, associated respectively with two HTTPS Bastions 103₁ and 103₂. Messages between HTTPS Bastions; 103ᵢ and Web applications 120₁ and 120₂ transit through an Egress function 104 of the Kubernetes cluster 100.

Messages between the User device 136 and target Web applications 120₁ and 120₂ may transit over a Public network 110, such as, without limitation, the internet. For security purposes, Firewalls may be implemented, such as: Firewall 130 between the User device 136 and the Application router 102, and Firewalls 115 and 116 between the Public network 110 and the Web applications 120₁ and 120₂ respectively. Optionally, a Single Sign On (SSO) capability may be added to the Firewall 130, and integrated via OpenID Connect (OIDC), Security Assertion Markup Language (SAML), or other mechanism.

A Library database145 may be provided that the HTTPS Bastions 103₁ and 103₂ may query to fetch a library corresponding to a type for the targeted Web applications 120₁ and 120₂ respectively: this library may then be used by the HTTPS Bastions 103₁ and 103₂ to accordingly rewrite portions of certain messages and responses exchanged between the Web applications 120₁ and 120₂ respectively and the User device 136.

In embodiments, the Library database 145 is not connected to HTTPS Bastions 103₁ and 103₂, but rather (not represented on Figure 1) to the Bastion orchestrator 160: once the latter knows frome the Infrastructure system the type for the Web applications 120₁ and 120₂ respectively, it can pass the corresponding library to HTTPS Bastions 103₁ and 103₂, to enable them to rewrite portions of certain requests and responses.

A Log system 125, such as, without limitation, a Security Information & Event Management system (SIEM), may optionally be implemented, allowing a User 140 to access selected messages and activity from the HTTPS Bastions 103₁ and/or 103₂ respectively. As explained below, HTTPS Bastions 103₁ and/or 103₂ may obfuscate certain information from within the selected messages and activity. The Log system 125 may for example collect and archives logs (operating system, applications, etc.) from multiple sources, in a single centralized location. Security log management, event management, and/or information management may be implemented as part of the Log system 125. The User 140 may thus monitor login and other events' activities, in particular those initiated by the User 135, perform log correlations and more generally perform security analysis and investigation of activities between the User 135 and the Web application 120₁ and/or 120₂. The Log system 125 may constitute a management layer on top of system and security controls for the Infrastructure system 150. It connects and unifies the information contained, and enables it to be analyzed and correlated from a single interface.

As appreciated by the person skilled in the art, Kubernetes cluster 100 is also equipped with an Ingress function not represented on Figure 1. Exchanges between Bastion orchestrator 160, Firewall 1, Log system 125, and Library database 145, and elements of the Kubernetes cluster 100, whether jobs or containers etc., transit through such Ingress function.

In function, the User 135 may request through the User device 136, to the Infrastructure system 150, administration access and support for Web application 120₁ and/or 120₂. Infrastructure system 150 controls User 135 authorization to access Web application 120₁ and/or 120₂. If access is granted:
- the Infrastructure system 150 may order a Bastion orchestrator 160 to create appropriate jobs in the Kubernetes cluster 100, including HTTPS Bastions 103₁ and/or 103₂ respectively. This may be performed by the Bastion orchestrator 160 for example through the Kubernetes API 101;
- once Kubernetes jobs are created: the User device 136 may send requests to Web application 120₁ and/or 120₂, through Firewall 130, Application router 102, HTTPS Bastions 103₁ and/or 103₂ respectively, Firewalls 115 and/or 116 respectively, and receive responses therefrom; and
- the Log system 125 may collect and archives logs of traffic through HTTPS Bastions 103₁ and/or 103₂ respectively.

The Bastion orchestrator 160 may also destroy jobs in the Kubernetes cluster 100, upon time-out or upon request. Thus, HTTPS Bastions 103₁ and/or 103₂ respectively are jobs that are temporary in nature. Optionally, the Bastion orchestrator 160 may be implemented as a container in the Kubernetes cluster 100.

HTTPS Bastions 103₁ and/or 103₂ take the form of Pods starting on the Kubernetes cluster 100. The jobs may first set up a dedicated configuration for the connection between the User device 136 and the Web application 120₁ and/or 120₂ respectively, including the configuration of SSO authentication as the case may be, the list of elements to be pseudonymized / masked with the Log system 125 where all request traces may be sent, and the list of rewrites necessary to ensure that the User 135 has a native browsing experience. Direct access to the administration web interface of Web application 120₁ and/or 120₂ is thus no longer possible; every traffic goes through HTTPS Bastions 103₁ and/or 103₂ respectively. The URL and SSL that the User 135 sees in his browser is no longer the URL and SSL of the web interface of Web application 120₁ and/or 120₂, but that of the HTTPS Bastions 103₁ and/or 103₂ respectively. Yet the application rendering may be adapted to display the correct URL or SSL, and Web application 120₁ and/or 120₂ respectively need not be modified.

Once the jobs have been deployed, a context may be created that will allow the User 135 through the User device 136 to connect to the Web application 120₁ and/or 120₂:
- the IP address of the HTTPS Bastions 103₁ and/or 103₂ must first be trusted by the Web application 120₁ and/or 120₂ respectively; this may be achieved by the owner of Web application 120₁ and/or 120₂ trusting beforehand the IP address of Egress function 104;
- the User 135 through the User device 136 may then receive the URL of the HTTPS Bastions 103₁ and/or 103₂ that he may open in a browser: this may redirect the User 135 to the preconfigured SSO for authentication; in other words, the Application router 102 is configured to redirect non-authenticated users to SSO;
- once the User 135 is authenticated with the SSO, his requests get redirected to the HTTPS Bastions 103₁ and/or 103₂: these may then decide whether the connection to the Web application 120₁ and/or 120₂ respectively was made by this authenticated user or not, and refuse the connection as necessary; this may be achieved by the Application router 102 receiving a header from the SSO telling it who is authenticated; this http header is then passed on to the HTTPS Bastions 103₁ and/or 103₂, which can check whether this http header matches the one authorised to pass through; HTTPS Bastions 103₁ and/or 103₂ who can pass through as the Bastion orchestrator 160 may provide a list of authorised people when it is initialised; and
- once the User 135 is trusted by the HTTPS Bastions 103₁ and/or 103₂, the latter may open the flow to the Web application 120₁ and/or 120₂ respectively, receive requests from the User device 136 and perform the various rewrites required before sending the requests such as without limitation POST, GET, etc. to the Web application 120₁ and/or 120₂, and receive responses from the same, and perform the various rewrites required before forwarding the responses on the User 135's browser, and also, as the case may be, forward User 135's requests and corresponding responses to the Log system 125.

The forwarding to Log system 125 may involve obfuscating information. For example, depending on the configuration of Web application 120₁ and/or 120₂, the User 135 logged in via SSO may already be authenticated in the Web application 120₁ and/or 120₂, or not, in which case the login and password associated with the authentication should not be forwarded (through sessions, cookies, etc.) to the Log system 125 for obvious security requirements.

Depending on the SSO configuration, an inactivity timeout of for example: 15 min implemented in the Bastion orchestrator 160, may force the Kubernetes jobs to be deleted, ie: instances of HTTPS Bastions 103₁ and/or 103₂ to be deleted. In all cases, HTTPS Bastions 103₁ and/or 103₂ are not instantiated longer than the time required by the User 135 to perform operations on the Web application 120₁ and/or 120₂.

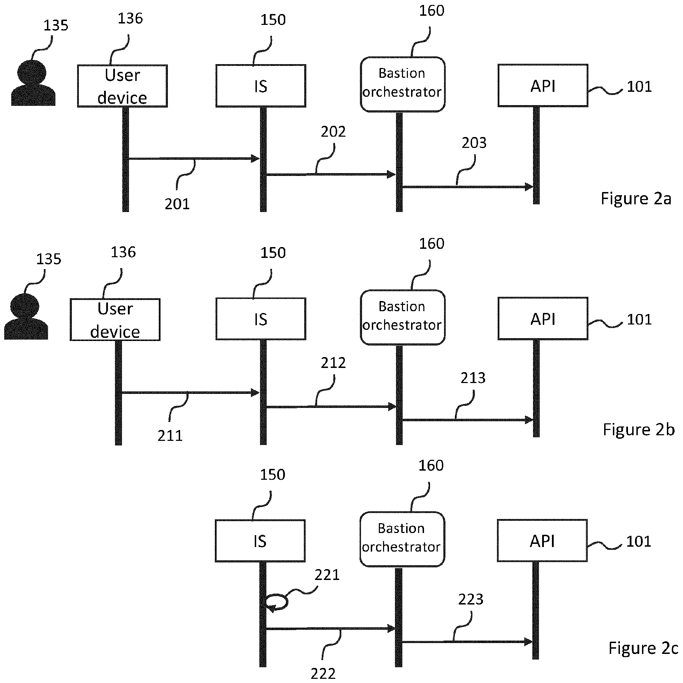

Figure 2a to 2c are flow diagrams of messages exchanged between elements of the system toward creation/destruction of temporary jobs in accordance with implementations of the present technology.

Illustrated on Figure 2a, the User 135, as an example, wants to access Web application 120₁. In such a case, the types of messages between elements may be as follows:

| **Reference** | **Elements involved** | **Message type** |
|---|---|---|
| 201 | User device 136 to Infrastructure system 150 | User 135 requests access to Web application 120₁, for example identified as "webapp01.tld" |
| 202 | Infrastructure system 150 to Bastion orchestrator 160 | A request is made to the Bastion orchestrator 160 to create a HTTPS Bastion 103₁, for access to webapp01.tld, of a type "webappType01", as requested by UPN XXX (http header provided by the SSO). This type information may be forwarded to HTTPS Bastion 103₁. |
| 203 | Bastion orchestrator 160 to API 101 | A request is made to the API 101 to create a Kubernetes job (ie: HTTPS Bastion 103₁) with information to access webapp01.tld as requested by UPN XXX. The information may comprise the type webappType01, allowing the created HTTPS Bastion 103₁ to load a corresponding library which may then be used to accordingly rewrite portions of certain messages and responses exchanged between the Web applications 120₁ and the User device 136. The created Kubernetes job may have a unique id: "ID XXX". |

Illustrated on Figure 2b, the User 135, as an example, wants to stop access to Web application 120₁. In such a case, the types of messages between elements may be as follows:

| **Reference** | **Elements involved** | **Message type** |
|---|---|---|
| 211 | User device 136 to Infrastructure system 150 | User 135 requests suppressing access to Web application 120₁, webapp01.tld |
| 212 | Infrastructure system 150 to Bastion orchestrator 160 | A request is made to the Bastion orchestrator 160 to destroy the HTTPS Bastion 103₁ |
| 213 | Bastion orchestrator 160 to API 101 | A request is made to the API 101 to destroy the Kubernetes job (ie: HTTPS Bastion 103₁) with ID XXX |

Illustrated on Figure 2c, as an example, access to Web application 120₁ is stopped as a result of a time-out, regardless of a corresponding request by the User 135. In such a case, the types of messages between elements may be as follows:

| **Reference** | **Elements involved** | **Message type** |
|---|---|---|
| 221 | Infrastructure system 150 | Not a message/message type per se: a timer may be incremented until it reaches a value when access to Web application 120₁, webapp01.tld is automatically suppressed, and the HTTPS Bastion 103₁ automatically destroyed. In embodiments, the timer may be implemented instead in the Bastion orchestrator 160 or the HTTPS Bastion 103₁ |
| 222 | Infrastructure system 150 to Bastion orchestrator 160 | A request is made to the Bastion orchestrator 160 to destroy the HTTPS Bastion 103₁ |
| 223 | Bastion orchestrator 160 to API 101 | A request is made to the API 101 to destroy the Kubernetes job (ie: HTTPS Bastion 103₁) with ID XXX |

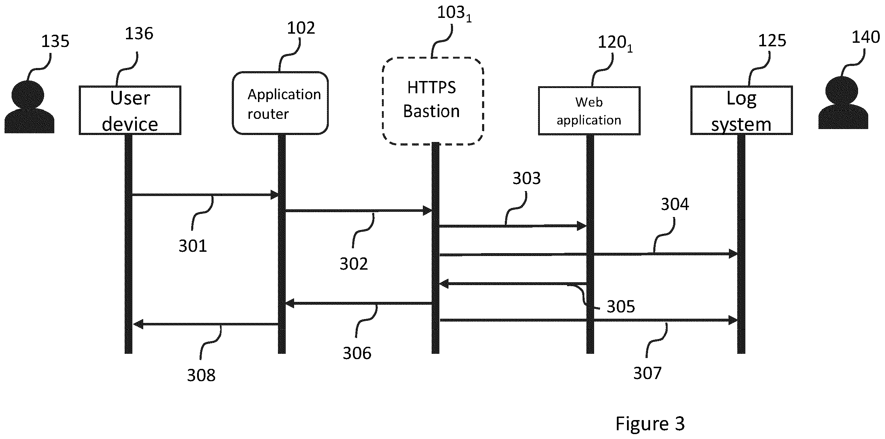

Figure 3 is a flow diagram of messages exchanged between elements of the system toward access of a user to a web application, and traceability of certain such messages in accordance with implementations of the present technology.

Three examples are provided of scenario/situation, with possible http message contents, from which the skilled person may derive other potential scenario/situation which the present technology may successfully address. Throughout the examples below, a portion of the message received by an element, and rewritten before sending to the next element, is indicated by " <------" next to the corresponding message line.

### Login call:

In this scenario/situation, the User 135 requests login to for example, Web application 120₁. In such a case, the substantive content of messages between elements may be as follows:

**Table 1**

| **Fig. 3** **Ref** | **Elements involved** | **Substantive message content** | |
|---|---|---|---|
| 301 | User device 136 to Applicati on router 102 | GET - https://webapp01.bastion.tld/ui/losin | |
| | | | GET /ui/login HTTP/2 |
| | | | Host: webapp01.bastion.tld |
| | | | Referer: https://webapp01.bastion.tld/ui/login |
| | | | Cookie: VSPHERE-UI-JSESSIONID=ABDCSEE; WXCV; |
| | | JSESSIONID=DFGHJK | |
| | | | --- |
| | | No Body | |
| 302 | Applicati on router 102 to HTTPS Bastion 103₁ | GET - http://bastion01/ui/login | |
| | | | GET /ui/login HTTP/2 |
| | | | Host: webapp01.bastion.tld |
| | | | Referer: https://webapp01.bastion.tld/ui/login |
| | | | Cookie: VSPHERE-UI-JSESSIONID=ABDCSEE; WXCV; |
| | | JSESSIONID=DFGHJK | |
| | | | --- |
| | | No Body | |
| 303 | HTTPS Bastion 103₁ to Web applicatio n 120₁ | GET - https://webapp01.tld/ui/login | |
| | | | GET /ui/login HTTP/2 |
| | | | Host: webapp01.tld <------ |
| | | | Referer: https://webapp01.tld/ui/login <------ |
| | | | Cookie: VSPHERE-UI-JSESSIONID=ABDCSEE; WXCV; |
| | | JSESSIONID=DFGHJK | |
| | | | - |
| | | No Body | |
| 304 | HTTPS Bastion 103₁ to Log system 125 | | Same as message of reference 303, less obfuscated message details |
| 305 | Web applicatio n 120₁ to HTTPS Bastion 103₁ | HTTP/2 302 Found | |
| | | | location: |
| | | https://webapp01.tld/websso/SAML2/SSO/vsphere.local?SAMLRequest=HXGS GSXHD | |
| | | | --- |
| | | Body: HTML Login Page | |
| 306 | HTTPS Bastion 103₁ to Applicati on router 102 | HTTP/2 302 Found | |
| | | | location: |
| | | https:Hwebapp01.bastion.tld/websso/SAML2/SSO/vsphere.local?SAMLRequest =HXGSGSXHD <------ | |
| | | | --- |
| | | Body: HTML Login Page | |
| 307 | HTTPS Bastion 103₁ to Log system 125 | Same as message of reference 306, less obfuscated message details | |
| 308 | Applicati on router 102 to User device 136 | Same as message of reference 306 | |

For ease of reading, the following comments are made in relation to the Table 1 above:
- Reference 302: apart from the first GET command, the rest of the message is identical to that of reference 301;
- References 304 and 307: obfuscated message details are defined throughout this description as message elements that either (i) are not required by User 140 to perform log correlations and more generally perform security analysis and investigation of activities between the User 135 and the Web application 120₁; and/or (ii) cause security issues, notably for Web application 120₁, beyond a threshold established by Infrastructure system 150, for example the webClientSessionId (see in messages of references 301-303 in the tables below) is always obfuscated; and/or (iii) are of such a size that their handling may overload the Log system 125: for example, if a file is uploaded via an http call, the http body size of that call will include, if not obfuscated, the file itself and this can result in a request of too large of a size.

### Call VM console:

In this scenario/situation, the User 135 requests opening a VM console for example, with Web application 120₁. In such a case, the substantive content of messages between elements may be as follows:

**Table 2**

| **Fig.3** **Ref** | **Elements involved** | **Substantive message content** | |
|---|---|---|---|
| 301 | User device 136 to Applicat ion router 102 | GET - https://webapp01.bastion.tld/ui/usersessionex/acquireCloneTicket/AZERTYAZE-AZE-AZERT-AZERTYAZE | |
| | | | GET Zui/usersessionex/acquireCloneTicket/AZERTY-AZE-AZE-AZERT-AZERTYAZE HTTP/2 |
| | | | Host: webapp01.bastion.tld |
| | | | User-Agent: Mozilla/5.0 |
| | | | webClientSessionId: s3cr3t |
| | | | Referer: |
| | | https://webapp01.bastion.tld/ui/app/vm;nav=v/urn:vmomi:VirtualMachine:vm-1234-4321/summary | |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE; VSPHERE-UI-XSRF-TOKEN=ABDCSEE; |
| | | | JSESSIONID=ABDCSEE; CastleSessionvsphere.local=_ABDCSEE |
| | | | --- |
| | | No Body | |
| 302 | Applicat ion router 102 to HTTPS Bastion 103₁ | GET - http://bastion01/ui/usersessionex/acquireCloneTicket/AZERTY-AZE-AZE-AZERT-AZERTYAZE | |
| | | | GET Zui/usersessionex/acquireCloneTicket/AZERTY-AZE-AZE-AZERT-AZERTYAZE HTTP/2 |
| | | | Host: webapp01.bastion.tld |
| | | | User-Agent: Mozilla/5.0 |
| | | | webClientSessionId: s3cr3t |
| | | | Referer: |
| | | https://webapp01.bastion.tld/ui/app/vm;nav=v/urn:vmomi:VirtualMachine: vm-1234-4321/summary | |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE; VSPHERE-UI-XSRF-TOKEN=ABDCSEE; |
| | | | JSESSIONID=ABDCSEE; CastleSessionvsphere.local=_ABDCSEE |
| | | | --- |
| | | No Body | |
| 303 | HTTPS Bastion 103₁ to Web applicati on 120₁ | POST - https://webapp01.tld/ui/usersessionex/acquireCloneTicket/AZERTYAZE-AZE-AZERT-AZERTYAZE | |
| | | | GET Zui/usersessionex/acquireCloneTicket/AZERTY-AZE-AZE-AZERT-AZERTYAZE HTTP/2 |
| | | | Host: webapp01.tld <------ |
| | | | User-Agent: Mozilla/5.0 |
| | | | webClientSessionId: s3cr3t |
| | | | Referer: |
| | | https://webapp01.tld/ui/app/vm;nav=v/urn:vmomi:VirtualMachine:vm-1234-4321/summary <------ | |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE; VSPHERE-UI-XSRF-TOKEN=ABDCSEE; |
| | | | JSESSIONID=ABDCSEE; CastleSessionvsphere.local=_ABDCSEE |
| | | | |
| | | No Body | |
| 304 | HTTPS Bastion 103₁ to Log system 125 | Same as message of reference 303, less obfuscated message details | |
| 305 | Web applicati on 120₁ to HTTPS Bastion 103₁ | HTTP/2 200 | |
| | | | ... |
| | | | --- |
| | | Body: | |
| | | {"userName":"user@localos","sessionTicket":"cst-VCT-XX-XX-XX-XX-XX-tp-XX-XX-XX-XX", | |
| | | "serverInfo": {"name":"webapp01.tld", | |
| | | "serviceUrl":"https://webapp01.tld:443/sdk", | |
| | | "serviceGuid": "XXX-XXX-XXX-XXX-XXXXX", | |
| | | "thumbprint":"RE:AL:PC:CT:HU:MB:PR:IN:TT:00:00:00:00:00:00:00:00:00:0 0:00","version":"7.0.3"} } | |
| 306 | HTTPS Bastion 103₁ to Applicat ion router 102 | HTTP/2 200 | |
| | | | ... |
| | | | --- |
| | | Body: | |
| | | {"userName":"user@localos","sessionTicket":"cst-VCT-XX-XX-XX-XX-XX-tp-XX-XX-XX-XX", | |
| | | "serverInfo": {"name":"webapp01.bastion.tld", <------ | |
| | | "serviceUrl":"https://webapp01.bastion.tld:443/sdk", <------ | |
| | | "serviceGuid": "XXX-XXX-XXX-XXX-XXXXX", | |
| | | "thumbprint" : "BA: ST:IO:NT:HU: MB: PR:IN: TT:00:00:00: 00:00:00:00:00:00: 0 0:00","version":"7.0.3"}} <------ | |
| 307 | HTTPS Bastion 103₁ to Log system 125 | Same as message of reference 306, less obfuscated message details | |
| 308 | Applicat ion router 102 to User device 136 | Same as message of reference 306 | |

For ease of reading, the following comments are made in relation to the Table 2 above:
- Reference 302: apart from the first POST command, the rest of the message is identical to that of reference 301;
- References 304 and 307: see comments in relation to corresponding messages in Table 1.

### Power-on VM console:

In this scenario/situation, the User 135 requests powering-on a VM console for example, with Web application 120₁. In such a case, the substantive content of messages between elements may be as follows:

**Table 3**

| **Fig. 3** **Ref** | **Elements involved** | **Substantive message content** | |
|---|---|---|---|
| 301 | User device 136 to Applicati on router 102 | POST - https://webapp01.bastion.tld/ui/mutation/applyOnMultiEntity | |
| | | | POST /ui/mutation/applyOnMultiEntity HTTP/2 |
| | | | Host: webapp01.bastion.tld |
| | | | User-Agent: Mozilla/5.0 |
| | | | webClientSessionId: s3cr3t |
| | | | Origin: https://webapp01.bastion.tld |
| | | | Referer: https://webapp01.bastion.tld/ui/app/vm;nav=v/urn:vmomi:VirtualMachine:vm-1234-4321/summary |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE; VSPHERE-UI-XSRF-TOKEN=ABDCSEE; |
| | | | JSESSIONID=ABDCSEE; CastleSessionvsphere.local=_ABDCSEE |
| | | | --- |
| | | Body: | |
| | | {"objectIds":["um:vmomi:VirtualMachine:vm-28:1234-4321"], | |
| | | "propertyObjectType":"com.vmware.vsphere.client.vm.powerops.VmPowerStat eSpec", | |
| | | "property Spec":" {\"powerState\":\"poweredOn\"}"} | |
| 302 | Applicati on router 102 to HTTPS Bastion 103₁ | POST - http://bastion01/ui/mutation/applvOnMultiEntity | |
| | | | POST /ui/mutation/applyOnMultiEntity HTTP/2 |
| | | | Host: webapp01.bastion.tld |
| | | | User-Agent: Mozilla/5.0 |
| | | | webClientSessionId: s3cr3t |
| | | | Origin: https://webapp01.bastion.tld |
| | | | Referer: https://webapp01.bastion.tld/ui/app/vm;nav=v/urn:vmomi:VirtualMachine:vm-1234-4321/summary |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE; VSPHERE-UI-XSRF-TOKEN=ABDCSEE; |
| | | | JSESSIONID=ABDCSEE; CastleSessionvsphere.local= _ABDCSEE |
| | | | --- |
| | | Body: | |
| | | {"objectIds":["um:vmomi:VirtualMachine:vm-28:1234-4321"], | |
| | | "propertyObjectType":"com.vmware.vsphere.client.vm.powerops.VmPowerStat eSpec", | |
| | | "property Spec":" {\"powerState\":\"poweredOn\"}"} | |
| 303 | HTTPS Bastion 103₁ to Web applicatio n 120₁ | POST - https://webapp01.tld/ui/mutation/applyOnMultiEntity | |
| | | | POST /ui/mutation/applyOnMultiEntity HTTP/2 |
| | | | Host: webapp01.tld <------ |
| | | | User-Agent: SupportAgent/1.0 <------ |
| | | | VMID : vm-28 <------ |
| | | | webClientSessionId: s3cr3t |
| | | | Origin: https://webapp01.tld <------ |
| | | | Referer: https://webapp01.tld/ui/app/vm;nav=v/urn:vmomi:VirtualMachine:vm-1234-4321/summary <------ |
| | | | Cookie: VSPHERE-UI-JSESSIONID=ABDCSEE; VSPHERE-USERNAME=user%40localos; |
| | | | VSPHERE-CLIENT-SESSION-INDEX=ABDCSEE;VSPHERE-UI-XSRF-TOKEN=ABDCSEE; |
| | | | JSESSIONID=ABDCSEE; CastleSessionvsphere.local= _ABDCSEE |
| | | | --- |
| | | Body: | |
| | | {"objectIds":["um:vmomi:VirtualMachine:vm-28:1234-4321"], | |
| | | "propertyObjectType":"com.vmware.vsphere.client.vm.powerops.VmPowerStat eSpec", | |
| | | "property Spec":" {\"powerState\":\"poweredOn\"}"} | |
| 304 | HTTPS Bastion 103₁ to Log system 125 | Same as message of reference 303, less obfuscated message details | |
| 305 | Web applicatio n 120₁ to HTTPS Bastion 103₁ | HTTP/2 200 | |
| | | | ... |
| | | | --- |
| | | Body: | |
| | | [{"entity":{"serverGuid":"XXXX-XXXX-XXXXX","type":"Datacenter","value":"datacenter-21"} , | |
| | | "propertyName":null,"parameter":null,"task":null,"taskUid":null, | |
| | | "result": { "attempted": [{"_type":"com.vmware.vim.binding.vim.cluster.Attempte dVmInfo", | |
| | | "vm":{"serverGuid": "XX-XX-XX-XXXXX","type":"VirtualMachine","value": "vm-28"}, | |
| | | "task": {"serverGuid":"XX-XX-XX-XX-XXX","type":"Task"," value":"task-30" } }], | |
| | | "notAttempted":null," recommendations": null}, | |
| | | "effect":null,"error":null}] | |
| 306 | HTTPS Bastion 103₁ to Applicati on router 102 | HTTP/2 200 | |
| | | | ... |
| | | | --- |
| | | Body: | |
| | | [{"entity":{"serverGuid":"XXXX-XXXX-XXXXX","type":"Datacenter","value":"datacenter-21"} , | |
| | | "propertyName":null,"parameter":null,"task":null,"taskUid" :null, | |
| | | "result":{"attempted":[{"_type":"com.vmware.vim.binding.vim.cluster.Attempte dVmInfo", | |
| | | "vm": {"serverGuid": "XX-XX-XX-XXXXX","type":"VirtualMachine","value": "vm-28"}, | |
| | | "task":{"serverGuid":"XX-XX-XX-XX-XXX","type":"Task","value":"task-30" } }], | |
| | | "notAttempted":null,"recommendations":null}, | |
| | | "effect":null,"error":null}] | |
| 307 | HTTPS Bastion 103₁ to Log system 125 | Same as message of reference 306, less obfuscated message details | |
| 308 | Applicati on router 102 to User device 136 | Same as message of reference 306 | |

For ease of reading, the following comments are made in relation to the Table 3 above:
- Reference 302: apart from the first POST command, the rest of the message is identical to that of reference 301;
- References 304 and 307: see comments in relation to corresponding messages of Table 1.
- Reference 306: the body of the message is the same as that of reference 305.

In relation to all 3 tables above:
- The changes of http address following GET/POST commands (302, 303) are not rewrites in the sense of the present description: they are merely changes allowing proper communication:
   ∘ The User device 136 is thus communicated the http address (301) of the Application router 102 by the Infrastructure system 150 upon user login activities described above;
   ∘ The Application router 102 is communicated the http address (302) of the HTTPS Bastion 103₁ by the Bastion orchestrator 160 upon HTTPS Bastion creation activities described above;
   ∘ The HTTPS Bastion 103₁ is communicated the http address (303) of the Web application 120₁ through regular http communication through Public network 110; for example the owner of Web application 120₁ will have authorized access to the IP address of the Egress function 104 of the Kubernetes cluster 100.

Further, in relation to all 3 tables above and the examples provided, rewrites may affect the header and/or the body of the http messages, depending on the reason and intended effect for the rewrite:
- For example, the following rewrites in the header achieve the following results:
   ∘ Table 3, reference 303:
      ▪ Host: webapp01.tld : is for interaction with, and useability of the web application;
      ▪ User-Agent: SupportAgent/1.0: allows traceability and auditability;
      ▪ VMID : vm-28: allows for traceability and auditability the tracking of various objects that the user identified by SESSIONID has performed during a session;
      ▪ Origin: https://webapp01.tld : is for interaction with, and useability of the web application;
      ▪ Referer: https://webapp01.tld/ui/app/vm;nav=v/um:vmomi:VirtualMachine:vm-1234-4321/summary : is for interaction with, and useability of the web application;
   ∘ Table 1, reference 306:
      ▪ location: https://webapp01.bastion.tld/websso/SAML2/SSO/vsphere.local?SAMLReq uest=HXGSGSXHD : is for interaction with, and useability of the web application;
- For example, the following rewrites in the body achieve the following results:
   ∘ Table 2, reference 306:
      ▪ "serverInfo": {"name":"webapp01.bastion.tld", : is for interaction with, and useability of the web application;
      ▪ "serviceUrl":"https://webapp01.bastion.tld:443/sdk", : is for interaction with, and useability of the web application;
      ▪ "serviceGuid":"XXX-XXX-XXX-XXX-XXXXX", "thumbprint": "BA: ST:IO:NT:HU:MB:PR:IN:TT:00:00:00:00:00:00:00:00:00 :00:00","version":"7.0.3 : is for interaction with, and useability of the web application;

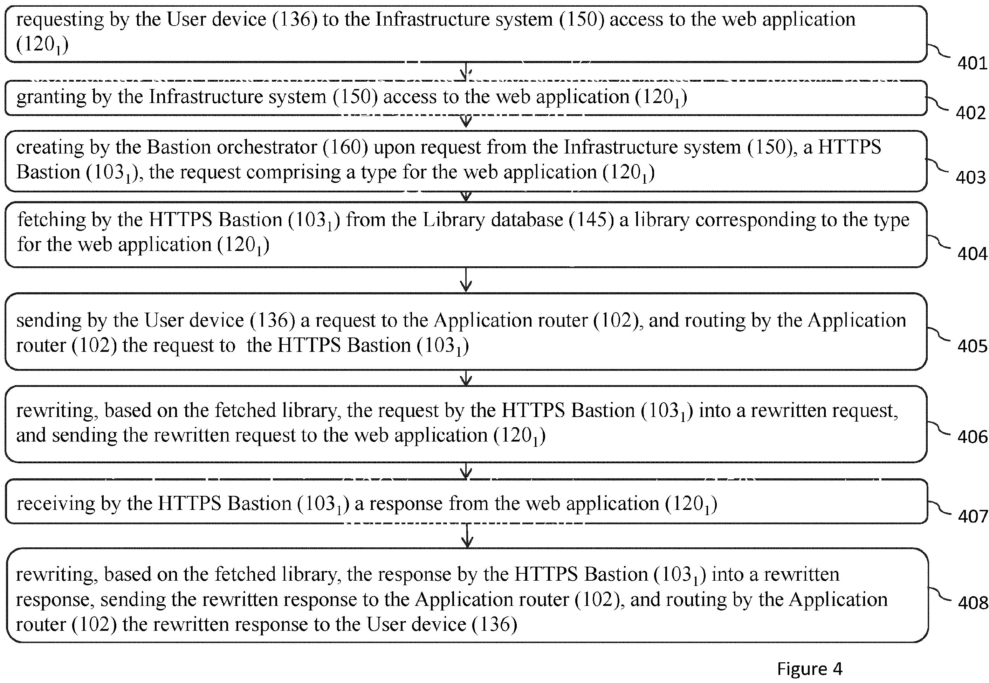

More specifically, as seen Figure 4, the method in accordance with the present technology, involves the following steps, in relation to the examples provided above:
- at step 401: requesting by the User device (136) to the Infrastructure system (150) access to the web application (120₁);
- at step 402: granting by the Infrastructure system (150) access to the web application (120₁) sending by the User device (136) a request to the HTTPS Bastion (103₁);
- at step 403: creating by the Bastion orchestrator (160) upon request from the Infrastructure system (150), a HTTPS Bastion (103₁), the request comprising a type for the web application (120₁);
- at step 404: fetching by the HTTPS Bastion (103₁) from the Library database (145) a library corresponding to the type for the web application (120₁);
- at step 405: sending by the User device (136) a request to the Application router (102), and routing by the Application router (102) the request to the HTTPS Bastion (103₁);
- at step 406: rewriting, based on the fetched library, the request by the HTTPS Bastion (103₁) into a rewritten request, and sending the rewritten request to the web application (120₁);
- at step 407: receiving by the HTTPS Bastion (103₁) a response from the web application (120₁); and
- at step 408: rewriting, based on the fetched library, the response by the HTTPS Bastion (103₁) into a rewritten response, and sending the rewritten response to the Application router (102), and routing by the Application router (102) the rewritten response to the User device (136).

Through the present technology, is provided a centralized access by a user device, to multiple web applications of an infrastructure system. Security of such access is ensured including through the temporary nature of the HTTPS bastions. Centralized traceability and audibility of such centralized access may also be enabled by the present technology.

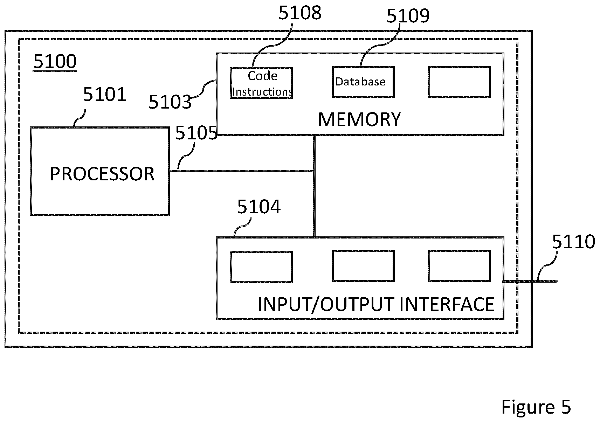

Figure 5 illustrates a computing system that may be used in the present technology, for example in any one of, or a subset of, or all of the elements of Figure 1, notably the Bastion orchestrator 160, the Kubernetes cluster 100 and the Library database 145. As will be appreciated by the person skilled in the art, such computing system may be implemented in any other suitable hardware, software, and/or firmware, or a combination thereof, and may be a single physical entity, or several separate physical entities with a distributed functionality.

In some aspects of the present technology, the Computing system 5100 may comprise various hardware components including one or more single or multi-core processors collectively represented by a Processor 5101, a Memory 5103 and an Input/output interface 5104. In this context, the Processor 5101 may or may not be included in a FPGA. In some other aspect, the Computing system 5100 may be an "off the shelf" generic computing system. In some aspect, the Computing system 5100 may also be distributed amongst multiple systems. The Computing system 5100 may also be specifically dedicated to the implementation of the present technology. As a person in the art of the present technology may appreciate, multiple variations as to how the Computing system 5100 is implemented may be envisioned without departing from the scope of the present technology.

Communication between the various components of the Computing system 5100 may be enabled by one or more internal and/or external Buses 5105 (e.g. a PCI bus, universal serial bus, IEEE 1394 "Firewire" bus, SCSI bus, Serial-ATA bus, ARINC bus, etc.), to which the various hardware components are electronically coupled.

The Input/output interface 5104 may enable networking capabilities such as wire or wireless access. As an example, the Input/output interface 5104 may comprise a networking interface such as, but not limited to, a network port, a network socket, a network interface controller and the like. Multiple examples of how the networking interface may be implemented will become apparent to the person skilled in the art of the present technology.

The Memory 5103 may store Code instructions 5108, such as those part of, for example, a library, an application, etc. suitable for being loaded into the Memory 5103 and executed by the Processor 5101 for implementing the method and process steps according to the present technology. The Memory 5103 may also store a Database 5109. The person skilled in the art will appreciate that any of the Database 5109, the Code instructions 5108, and generally the Memory 5103, may also physically reside outside of the Computing System 5100, still within the scope of the present technology.

The Input/output interface 5104 may allow Computing System 5100 to be communicably connected to other processors through a Connection 5110.While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method for accessing a web application (120₁) accessible through a web interface comprising:
- requesting (401, 201) by a User device (136) to an Infrastructure system (150) access to the web application (120₁);
- granting (402) by the Infrastructure system (150) access to the web application (120₁);
- creating (403, 202, 203) by a Bastion orchestrator (160) upon request from the Infrastructure system (150), a HTTPS Bastion (103₁), the request comprising a type for the web application (120₁);
- fetching (404) by the HTTPS Bastion (103₁) from a Library database (145) a library corresponding to the type for the web application (120₁);
- sending (405, 301, 302) by the User device (136) a request to an Application router (102), and routing by the Application router (102) the request to the HTTPS Bastion (103₁);
- rewriting (406), based on the fetched library, the request by the HTTPS Bastion (103₁) into a rewritten request, and sending (303) the rewritten request to the web application (120₁);
- receiving (407, 305) by the HTTPS Bastion (103₁) a response from the web application (120₁); and
- rewriting (408), based on the fetched library, the response by the HTTPS Bastion (103₁) into a rewritten response, sending (306, 308) the rewritten response to the Application router (102), and routing by the Application router (102) the rewritten response to the User device (136).

2. The method of claim 1 further comprising:
- obfuscating message details from the rewritten request and the rewritten response; and
- sending (304) by the HTTPS Bastion (103₁) to a Log System (125) obfuscated copies of the rewritten request, and/or of the rewritten response.

3. The method of any of the claims 1 or 2 further comprising:
- sending by the Bastion orchestrator to the HTTPS Bastion a list of authorized user devices; and
- checking by the HTTPS Bastion through inspecting the request header, that the User device is on the list, and if it is not, rejecting the request.

4. The method of any of the claims 1 to 3 further comprising:
- authenticating a user of the User device through a SSO (130);
- sending by the SSO a http header for the authenticated user to the Application router;
- sending by the Application router the http header to the HTTPS Bastion;
- checking by the HTTPS Bastion through comparing the request header and the received http header, that the user is authenticated, and if it is not, rejecting the request.

5. The method of any of the claims 2 to 4 wherein the obfuscated message details comprise login and password of the authenticated user.

6. The method of claim 1, wherein the web application is one of at least two web applications, a first and a second, further comprising:
- requesting (201) by the User device (136) to the Infrastructure system (150) access to the second web application (120₂);
- granting by the Infrastructure system (150) access to the second web application (120₂);
- creating (202,203) by the Bastion orchestrator (160) upon request from the Infrastructure system (150), a second HTTPS Bastion (103₂), the request comprising a type for the second web application (120₂);
- fetching by the second HTTPS Bastion (103₂) from the Library database (145) a library corresponding to the type for the second web application (120₂);
- sending (301, 302) by the User device (136) a second request to the Application router (102), and routing by the Application router (102) the second request to the second HTTPS Bastion (103₂);
- rewriting, based on the fetched library corresponding to the type for the second web application (120₂), the second request by the second HTTPS Bastion (103₂) into a second rewritten request, and sending (303) the second rewritten request to the second web application (120₂);
- receiving (305) by the second HTTPS Bastion (103₂) a second response from the second web application (120₂); and
- rewriting, based on the fetched library corresponding to the type for the second web application (120₂), the second response by the second HTTPS Bastion (103₂) into a second rewritten response, sending (306, 308) the second rewritten response to the Application router (102), and routing by the Application router (102) the second rewritten response to the User device (136).

7. A system for accessing a web application (120₁) accessible through a web interface comprising:
- a Bastion orchestrator (160);
- an Application router (102);
- a Library database; and
- a HTTPS Bastion (103₁);
- the HTTPS Bastion (103₁) being created by the Bastion orchestrator (160) upon request from an Infrastructure system (150), upon a request by a User device (136) to the Infrastructure system (150) for access to a web application (120₁) and a grant by the Infrastructure system (150) of such access, the request from the Infrastructure system (150) comprising a type for the web application (120₁);
- the Application router (102) being configured to receive a request by the User device (136) and route such request to the HTTPS Bastion (103₁), and receive a rewritten response from the HTTPS Bastion (103₁) and route the rewritten response to the User device (136); and
- the HTTPS Bastion (103₁) being configured to:
- fetch (404) from the Library database (145) a library corresponding to the type for the web application (120₁);
- rewrite (406), based on the fetched library, the request received from the Application router (102) into a rewritten request, and send (303) the rewritten request to the web application (120₁);
- receive (407, 305) a response from the web application (120₁); and
- rewrite (408), based on the fetched library, the response into the rewritten response, and send (306, 308) the rewritten response to the Application router (102).

8. The system of claim 7 wherein the HTTPS Bastion is further configured to:
- obfuscate message details from the rewritten request and the rewritten response; and
- send (304) to a Log System (125) obfuscated copies of the rewritten request, and/or of the rewritten response.

9. The system of any of the claims 7 or 8 wherein:
- the Bastion orchestrator is further configured to send to the HTTPS Bastion a list of authorized user devices; and
- the HTTPS Bastion is further configured to check through inspecting the request header, that the User device is on the list, and if it is not, rejecting the request.

10. The system of any of the claims 7 to 9 wherein:
- the Application router is further configured to receive from a SSO (130) a http header corresponding to a user of the User device authenticated by the SSO, and sending the http header to the HTTPS Bastion; and
- the HTTPS Bastion is further configured to compare the request header and the received http header, check that the user is authenticated, and if it is not, reject the request.

11. The system of any of the claims 8 to 10 wherein the HTTPS Bastion is further configured to obfuscate message details comprising login and password of the authenticated user.

12. The system of any of the claims 7 to 11 wherein the HTTPS Bastion is a Kubernetes job.

13. The system of claim 7 comprising a second HTTPS Bastion (103₂) being created by the Bastion orchestrator (160) upon request from the Infrastructure system (150), upon a request by the User device (136) to the Infrastructure system (150) for access to a second web application (120₁) and a grant by the Infrastructure system (150) of such access, the request from the Infrastructure system (150) comprising a type for the second web application (120₁);
- the second HTTPS Bastion (103₂) being configured to:
- fetch (404) from the Library database (145) a library corresponding to the type for the second web application (120₂);
- rewrite (406), based on the fetched library, the request received from the Application router (102) into a rewritten request, and send (303) the rewritten request to the second web application (120₁);
- receive (407, 305) a response from the second web application (120₁); and
- rewrite (408), based on the fetched library, the second response into the rewritten response, and send (306, 308) the rewritten response to the Application router (102).

14. A computer-readable medium comprising instructions which, when executed by a processing unit, cause the processing unit to perform the method of any of the claims 1 to 6.
